# EUROPEAN PATENT SPECIFICATION

(11) **EP 2 521 852 B1**
(45) Date of publication and mention of the grant of the patent: **21.06.2017**
(21) Application number: 11700301.2
(22) Date of filing: 07.01.2011
(51) Int. Cl.: F02M 25/08, F02M 37/08, F02M 37/20, F02M 37/14

(54) **VAPOR SEPARATOR WITH INTEGRAL LOW PRESSURE LIFT PUMP**
DAMPFABSCHEIDER MIT INTERGRIERTER NIEDERDRUCKSAUGPUMPE
SÉPARATEUR DE VAPEUR MUNIE D'UNE POMPE ÉLÉVATOIRE À BASSE PRESSION INTÉGRÉE

(30) Priority: 08.01.2010 US 293363 P
(43) Date of publication of application: 14.11.2012
(73) Proprietor: Carter Fuel Systems, LLC, Cleveland, OH 44114 (US)
(72) Inventor: ACHOR, Kyle, Dean, Monticello IN 47960 (US)
(74) Representative: Weber-Bruls, Dorothée
(86) International application number: PCT/US2011/020454
(87) International publication number: WO 2011/085156

(56) References cited:
- FR-A1- 2 798 164
- US-A- 5 070 849
- US-A- 5 139 000
- US-B1- 6 581 579
- US-B1- 6 857 419

## Description

### BACKGROUND OF THE INVENTION

### 1. Field of the Invention

The subject invention relates to a system for supplying fuel under pressure to an internal combustion engine, and, more specifically, to controlling fuel delivery to a fuel injection system in an internal combustion engine having a low pressure pump formed integrally as at least part of a main housing of a vapor separator assembly.

### 2. Description of the Prior Art

In fuel supply systems, and in particular for a marine engine having in-board and stern drive type engines, it is often challenging to supply an uninterrupted flow of fuel under all operating conditions. The operating environment is frequently very hot, causing the fuel to vaporize if not carefully controlled. And fuel delivery must be compatible with marine engine run cycles which are characterized by long periods of operation at a steady RPM, punctuated by abrupt instances of rapid acceleration or deceleration. Throughout these cycles and conditions, fuel is expected to be delivered to the engine without interruption.

Furthermore, marine applications are often subject to harsh vibrations and jarring. The fuel delivery system must be heartily designed and fortified to prevent fuel leakage even under violent operating conditions. Leaked fuel on a marine vessel can, in extreme instances, result in fire which may require immediate human evacuation regardless of the vessel location or weather conditions.

Thus, meeting the fuel demands of a marine engine under these operating conditions and in consideration of these safety issues can be a challenge. A prior art technique to provide fuel to a marine engine is shown in applicant's own U.S. Pat. No. 6,257,208. According to this technique, a high pressure fuel pump delivers a continual supply of fuel to the engine injector system in sufficient quantities to meet engine demands at so-called 'full throttle.' When the engine fuel demands are less than 'full throttle,' a return line is employed to return unneeded fuel from the engine injector system to the vapor separator.

One disadvantage of this technique resides in the requirement to design and fabricate the return line and associated fittings with extremely high quality and durable components to avert the possibility of fuel leakage over the foreseeable service interval of the fuel supply system. This increases both the cost of the fuel supply system and the risk of leakage, particularly where operating conditions are harsh and service intervals extend beyond manufacturer recommendations.

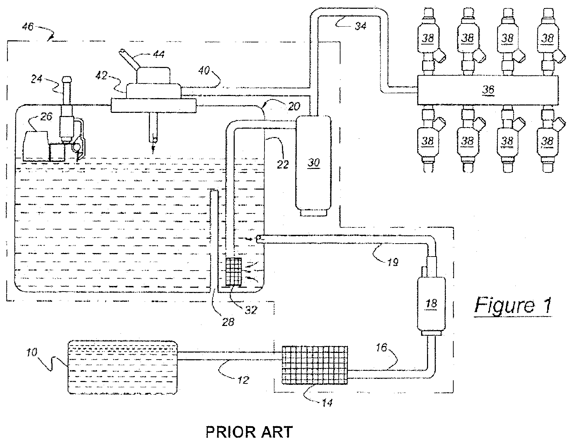

In another prior art disclosure owned by applicant, U.S. Pat. No. 7,168,414, the system eliminates the recirculation of unused fuel through the engine injector system, as described above. In turn, this also eliminates the added design and fabrication costs of the return line, and reduces the risk of fuel leakage. As illustrated in Figure 1, the system is characterized by a bypass line 40 which extends between the fuel delivery line 34 and the vapor separator 20 for returning excess fuel to the vapor separator prior to its reaching the engine injector system. In this manner, fuel in excess of the demands of the engine injector system is returned directly to the vapor separator thus eliminating the need to recirculate unneeded fuel through the engine injector system.

In additional to the disadvantages describe above, this system suffers from having a low pressure lift pump 18 located outside of the vapor separator 20. This requires additional mounting hardware and fuel hose routings, which increase the costs and leakage points of fuel.

U.S. Pat. No. 6,857,419 discloses a vapor separator for a fuel pump assembly having a fuel return intake arranged into a hollow chamber. The heated fuel is cooled by y coolant flowing through a coil within the hollow chamber.

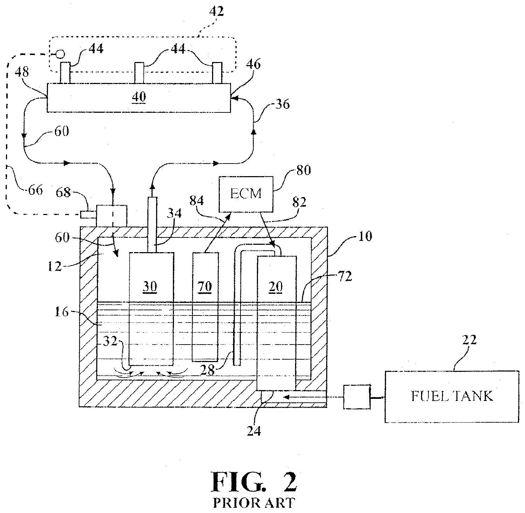

Another prior art system is U.S. Pat, No. 6,390,871, which discloses a fuel reservoir mounted to a driveshaft housing of an outboard motor. As illustrated in Figure 2, a first fuel pump 20 is a lift pump which draws fuel from a fuel tank and pumps the fuel into the cavity 12 of the reservoir 10. A second fuel pump 30 is a high pressure pump which draws fuel from the cavity and pumps the fuel at a higher pressure to a fuel rail of an engine. Both the first and second pumps are disposed within a volume of fuel stored in the fuel reservoir. Although providing less leakage points than the aforementioned prior art, this system still suffers from leakage points and costs associated with assembly and mounting

### SUMMARY OF THE INVENTION

The subject invention overcomes the disadvantages of the prior art by eliminating leakage points and increased costs associated with assembly. Rather, a low pressure lift pump, such as a pulse pump, is integrally formed at least in part with the vapor separator. The pump, for example, may be located internally, externally or partly internally and partly externally to the vapor separator. This, in turn, eliminates the added design and fabrication costs of the prior art, and reduces the risk of fuel leakage.

In accordance with the invention a fuel vapor separator is provided as specified in appended claim 1. The low pressure pump may be internal or external to the housing. A reservoir in the housing has a cavity to contain liquid fuel for use by an engine, the high pressure pump draws fuel from the cavity and pumps fuel to the engine, and the low and high pressure pumps are preferably disposed in thermal communication with the fuel when the fuel is within the cavity. A decoupled float valve may vents vapor from the vapor separator when the fuel in the cavity falls below a predetermined level. A pressure relief valve opens when a predetermined pressure is reached within the cavity to vent fuel vapor from the cavity.

### BRIEF DESCRIPTION OF THE DRAWINGS

Advantages of the present invention will be readily appreciated by reference to the following detailed description when considered in connection with the accompanying drawings wherein:
FIG. 1 is a schematic diagram of a marine vapor separator with a bypass line in accordance with the prior art.
FIG. 2 is a schematic representation of a fuel system for a marine propulsion system in accordance with the prior art; and
FIG. 3 is a schematic diagram according to the invention where the low pressure pump is formed integrally with the vapor separator

### DETAILED DESCRIPTION OF THE PREFERRED EMBODIMENT

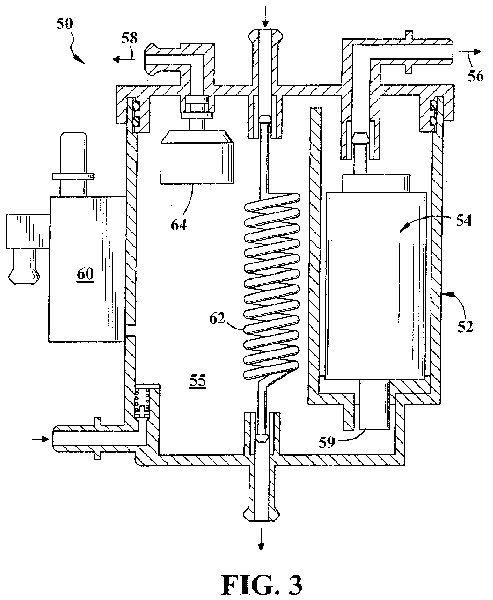

Referring to the Figures, wherein like numerals indicate like or corresponding parts throughout the several views, a fuel supply system for a marine internal combustion engine in is illustrated schematically in FIG. 3.

Figure 3 illustrates a fuel vapor separator 50 having a main body 52 formed of polymeric materials that is adapted to receive a supply of liquid fuel and provide a substantially vapor free supply of liquid fuel to fuel pump 54. The fuel pump 54 is preferably carried by the fuel vapor separator 50 and may be an electric motor driven fuel pump having an inlet in communication with the supply of liquid fuel in the main body 52 and an outlet 56 through which pressurized fuel is discharged for delivery to an engine. Fuel is pumped from a tank (not shown) using a low pressure lift pump 60 into a reservoir 55 of the vapor separator 50. The low pressure lift pump 60 is formed integrally with the vapor separator 50. That is, at least part of the low pressure lift pump is formed from the same material and integral with the vapor separator body 52. This provides fewer leakage paths and helps to reduce costs associated with assembly. The low pressure pump may reside external to the vapor separator 50, as illustrated in Fig. 3, or it may reside internal to the vapor separator (not illustrated), as well known in the art.. For example, the low pressure pump and vapor separator may be formed from the same material to create a single continuous unit. In a preferred embodiment, the low pressure pump 60 is a pulse type pump. A pulse fuel pump typically has four tubes connected to it. One tube connects the fuel tank. Two tubes connect to the crankcase of the engine and one tube connects to the inlet of the fuel vapor separator. When the engine revolves, the tube connecting the engine delivers fuel with a pulse of pressure at each revolution. The diaphragm pulsates with the pressure. At the top of the pump are two chambers, which are separated by a pair of one way valves. These valves ensure that the fuel that passes through does not come back. Fuel flows from one chamber to the other at one pulse and at the next pulse, fuel moves to the engine.

In more detail, fuel is routed from a tank (not illustrated) via a low-pressure type lift pump 60, such as a pulse pump, which urges fuel into the vapor separator, generally indicated at 50. The vapor separator 50 thus receives liquid fuel from a fuel tank through a direct distribution system. The primary purpose of the vapor separator 50 is to collect and discharge vapors given off from the fuel. In this embodiment, the low pressure pump 60 is integrally formed as at least part of the vapor separator 50 and continually adds more liquid fuel to a reservoir of vapor separator 50. A vapor vent 58 allows vapors to bleed off. The vapor vent 58 is controlled by a float valve, preferably decoupled 64, which is responsive to the level of liquid fuel in the reservoir of vapor separator 50. Whenever liquid fuel threatens to escape through the vapor vent 58, the float valve automatically closes. In all non-threatening conditions, the vapor vent 58 remains open to exhaust fuel vapors.

The high pressure pump 54 has a fuel inlet 59 for withdrawing liquid fuel from the reservoir region of the vapor separator 50. The high pressure pump 54 also has a fuel outlet 56 for delivering fuel under pressure to an engine injector system. The engine injector system can be of any type suited to vaporize fuel for a marine engine (not shown). In the typical case, the engine injector system includes a plurality of injectors.

The high-pressure pump 54 is designed to run continuously whenever the engine is in operation. The pump 54 is also rated to provide maximum fuel delivery and pressure for engine 'full throttle' conditions. However, because an engine is not run at full throttle condition at all times, the pump 54 will attempt to deliver more fuel than is needed during other (non 'full throttle') conditions.

To alleviate excess pressure build-up in the fuel delivery line and the associated fittings, as well as in the engine injector system, a bypass or return line (not shown) may extend between the fuel delivery line and the vapor separator 50. The bypass or return line returns excess fuel to the vapor separator 50 prior to the fuel reaching the engine injector system and thereby eliminates the need to recirculate unused fuel through the engine injector system.

In operation, fuel is supplied to the engine by first moving liquid fuel from a fuel tank to the vapor separator 50 by use of the low pressure pump 60. Water is separated from the fuel prior to reaching the low pressure pump. In the vapor separator 50, vapors given off from the fuel are collected and vented, or bled, to the atmosphere or other suitable collection system. The float valve automatically interrupts the vapor bleeding in response to the level of liquid fuel in the vapor separator 50 reaching a predetermined height to prevent the escape of liquid fuel through the vapor vent 58.

The high pressure pump 54 withdraws liquid fuel from the vapor separator 50 and delivers it under pressure to the engine injector system via a fuel delivery line (fuel out 56). However, the fuel pressure between the high pressure pump 54 and the engine injector system is monitored to determine whether the engine injector system is being presented with more fuel than is required for efficient engine operation. If more fuel than needed is being supplied by the high pressure pump 54, the extra, unneeded fuel may be automatically returned to the vapor separator 50 through a bypass or return line. Thus, fuel in excess of engine demand is returned to the vapor separator 50 prior to its reaching the engine injector system.

In addition, positioned internally within main body 52 of vapor separator assembly 50 is a hollow cylindrical tube 62 which is bent and configured into a coil having multiple circular loops. An intake end is connected to a source of liquid coolant (not shown) which in the case of a Marine engine is typically a pump that pumps water from the lake or ocean water environment in which the engine is operating into the engine for cooling purposes. The coolant water typically is used to cool the combustion chambers of the engine as well as the vapor separator assembly 50. The lake or ocean water or other liquid coolant is pumped through tube coil 62 from the first end to a second outlet end thereby removing heat from the interior of main body 52 of vapor separator assembly 50.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims, wherein that which is prior art is antecedent to the characterized novelty and reference numerals are merely for convenience and are not to be in any way limiting, the invention may be practiced otherwise than as specifically described.

## Claims

1. A fuel vapor separator (50), comprising:
a housing (52) having a reservoir having a cavity to include liquid fuel for use by an engine;
a low pressure pump (60) to deliver fuel to the vapor separator, the low pressure pump being formed at least in part as a single piece of material with the housing (52), wherein
the low pressure pump (60) is integrally formed as at least part of the vapor separator (50), and is internal to the housing (52);
a high pressure pump (54) being disposed within the cavity of the reservoir to deliver fuel to the engine; and
a hollow tube configured into a coil (62) having a plurality of loops, the coil dimensions to fit within the interior of the housing (52), the tube having first and second ends extending through the housing for connection to respective coolant supply and discharge members, wherein liquid coolant is pumped through coil (62) from the first end to the second end thereby removing heat from the interior of the housing (52) of the fuel vapor separator (50).

2. The fuel vapor separator of claim 1, wherein the high pressure pump (54) draws fuel from the cavity and pumps fuel to the engine, and the low and high pressure pumps (60, 54) are disposed in thermal communication with the fuel when the fuel is within the cavity.

3. The fuel vapor separator of claim 1, further comprising a decoupled float valve (64) to vent vapor from the vapor separator (50) when the fuel in the cavity falls below a predetermined level.

4. The fuel vapor separator of claim 1, wherein the low pressure pump (60) is a pulse pump.

## Patentansprüche

1. Kraftstoffdampfabscheider (50), umfassend:
ein Gehäuse (52) mit einem Behälter mit einem Hohlraum zur Aufnahme von Flüssigkraftstoff zur Verwendung durch einen Motor;
eine Niederdruckpumpe (60) zur Zuführung von Kraftstoff zu dem Dampfabscheider, wobei die Niederdruckpumpe zumindest teilweise in einem Stück mit dem Gehäuse (52) ausgebildet ist,
wobei die Niederdruckpumpe (60) einstückig als zumindest ein Teil des Dampfabscheiders (50) ausgebildet ist und sich in dem Gehäuse (52) befindet;
eine Hochdruckpumpe (54), die innerhalb des Hohlraums des Behälters angeordnet ist, zur Zuführung von Kraftstoff zum Motor; und
eine Hohlröhre, die als Wendel (62) mit einer Mehrzahl von Windungen ausgestaltet ist, wobei die Abmessungen der Wendel so sind, dass sie in das Innere des Gehäuses (52) passen, wobei die Röhre ein erstes und zweites Ende aufweist, die sich durch das Gehäuse erstrecken, zur Verbindung mit jeweiligen Kühlmittelzufuhr- und -abgabeelementen, wobei Kühlflüssigkeit durch die Wendel (62) vom ersten Ende zum zweiten Ende gepumpt wird und dadurch Wärme aus dem Inneren des Gehäuses (52) des Kraftstoffdampfabscheiders (50) abgeführt wird.

2. Kraftstoffdampfabscheider nach Anspruch 1, wobei die Hochdruckpumpe (54) Kraftstoff aus dem Hohlraum ansaugt und Kraftstoff zum Motor pumpt und die Nieder- und Hochdruckpumpen (60, 54) in thermischem Austausch mit dem Kraftstoff angeordnet sind, wenn sich der Kraftstoff in dem Hohlraum befindet.

3. Kraftstoffdampfabscheider nach Anspruch 1, der ferner ein entkoppeltes Schwimmerventil (64) umfasst, um Dampf aus dem Dampfabscheider (50) abzulassen, wenn der Kraftstoff in dem Hohlraum ein vorgegebenes Niveau unterschreitet.

4. Kraftstoffdampfabscheider nach Anspruch 1, wobei die Niederdruckpumpe (60) eine pulsierende Pumpe ist.

## Revendications

1. Séparateur de vapeur (50) de carburant, comprenant:
un carter (52) ayant un réservoir ayant une cavité destinée à inclure un carburant liquide destiné à être utilisé par un moteur ;
une pompe basse pression (60) destinée à fournir du carburant au séparateur de vapeur, la pompe basse pression étant formée au moins en partie d'une seule pièce de matériau avec le carter (52), la pompe basse pression (60) étant formée d'un seul tenant au moins en tant que partie du séparateur de vapeur (50), et étant interne au carter (52) ;
une pompe haute pression (54) étant disposée à l'intérieur de la cavité du réservoir pour fournir du carburant au moteur ; et
un tube creux configuré en un serpentin (62) ayant une pluralité de boucles, les dimensions de serpentin destinées à s'adapter à l'intérieur du carter (52), le tube ayant des première et seconde extrémités s'étendant à travers le carter pour le raccordement à des éléments respectifs d'alimentation et de décharge de réfrigérant, du réfrigérant liquide étant pompé à travers le serpentin (62) à partir de la première extrémité vers la seconde extrémité, enlevant ainsi de la chaleur à partir de l'intérieur du carter (52) du séparateur de vapeur (50) de carburant.

2. Séparateur de vapeur de carburant selon la revendication 1, dans lequel la pompe haute pression (54) extrait du carburant à partir de la cavité et pompe du carburant vers le moteur, et les pompes basse et haute pression (60, 54) sont disposées en communication thermique avec le carburant quand le carburant est à l'intérieur de la cavité.

3. Séparateur de vapeur de carburant selon la revendication 1, comprenant également une valve à flotteur (64) découplée destinée à évacuer de la vapeur à partir du séparateur de vapeur (50) quand le carburant dans la cavité passe au-dessous d'un niveau prédéterminé.

4. Séparateur de vapeur de carburant selon la revendication 1, dans lequel la pompe basse pression (60) est une pompe à impulsion.
